# EUROPEAN PATENT APPLICATION

(11) **EP 2 348 646 A1**
(43) Date of publication of application: **27.07.2011**
(21) Application number: 09830016.3
(22) Date of filing: 01.12.2009
(51) Int. Cl.: H04B 7/04

(54) **MULTIPLE-INPUT MULTIPLE-OUTPUT MODE CONTROL METHOD, DEVICE AND SYSTEM**

(30) Priority: 04.12.2008 CN 200810182759
(71) Applicant: Huawei Technologies Co., Ltd., Shenzhen, Guangdong 518129 (CN)
(72) Inventor: HAN, Chongyang, Shenzhen Guangdong 518129 (CN); WANG, Zongjie, Shenzhen Guangdong 518129 (CN); MA, Xueli, Shenzhen Guangdong 518129 (CN)
(74) Representative: Thun, Clemens
(86) International application number: PCT/CN2009/075245
(87) International publication number: WO 2010/063232

(57) **Abstract**

A method and system for Multiple-Input Multiple-Output, MIMO, mode control are provided. The method includes: receiving signaling sent by a network side, where the signaling includes uplink MIMO control information; and controlling an uplink MIMO mode according to the uplink MIMO control information. After an uplink MIMO is introduced to a communication system, the uplink MIMO mode can be controlled to switch freely among start, stop, and continuation through a mechanism corresponding to an operation of a downlink MIMO mode.

## Description

This application claims priority to Chinese Patent Application No. 200810182759.0, filed with the Chinese Patent Office on December 4, 2008 and entitled "METHOD AND SYSTEM FOR MULTIPLE-INPUT MULTIPLE-OUTPUT MODE CONTROL", which is incorporated herein by reference in its entirety.

### FIELD OF THE INVENTION

The present invention relates to the field of communication technologies, and in particular, to a method and system for a Multiple-Input Multiple-Output (MIMO) mode control.

### BACKGROUND OF THE INVENTION

With the rapid development of communication technologies, Wideband Code Division Multiple Access, WCDMA, as one of mainstream technologies of a third generation, 3G, mobile communication system, has been widely studied and applied in a global scope. In order to increase flexibility of system configuration, improve a data transmission rate, and reduce data transmission delay, an MIMO technology exists in the prior art. The MIMO technology can be approximately divided into two categories: transmission/reception diversity and spatial reuse. A channel capacity is linearly increased with a growing number of antennas. In other words, a wireless channel capacity can be improved by several times by using an MIMO channel, and a frequency spectrum unitization may be improved by several times without increasing bandwidth and antennal transmission power. The MIMO technology has many advantages, for example, the MIMO technology can expand cellular coverage, and reduce energy consumption and cost of a mobile device.

In the prior art, no solution is proposed to control an uplink MIMO mode in a WCDMA system, and an uplink data transmission rate is not substantially improved.

### SUMMARY OF THE INVENTION

The present invention relates to a method and system for MIMO mode control. Through the technical solutions provided by embodiments of the present invention, an uplink MIMO mode may be controlled after an uplink MIMO is introduced to a communication system.

A method for MIMO mode control is provided according to the first aspect of the present invention, where the method includes:
constructing signaling, where the signaling includes uplink MIMO control information, and the uplink MIMO control information is used to instruct a User Equipment, UE, to control an uplink MIMO mode according to the uplink MIMO control information; and then sending the constructed signaling to the UE.

A method for MIMO mode control method is provided according to the second aspect of the present invention, where the method includes:
receiving signaling sent by a network side, where the signaling includes uplink MIMO control information; and controlling an uplink MIMO mode according to the uplink MIMO control information.

A signaling sending device is provided according to the third aspect of the present invention, where the device includes:
a signaling constructing unit, configured to construct signaling, where the signaling includes uplink MIMO control information, and the uplink MIMO control information is used to instruct a UE to control an uplink MIMO mode according to the uplink MIMO control information; and
a sending unit, configured to send the constructed signaling to the UE.

A UE is provided according to the forth aspect of the present invention, where the UE includes:
a receiving unit, configured to receive signaling sent by a network side, where the signaling includes uplink MIMO control information; and
a control unit, configured to control an uplink MIMO mode according to the uplink MIMO control information.

A communication system is provided according to the fifth aspect of the present invention, where the system includes:
a signaling sending device, configured to send signaling to a UE, where the signaling includes uplink MIMO control information, and the uplink MIMO control information is used to instruct the UE to control an uplink MIMO mode according to the uplink MIMO control information; and
a UE, configured to receive the signaling sent by the signaling sending device and including the uplink MIMO control information, and control the uplink MIMO mode according to the uplink MIMO control information.

It can be known from the technical solutions provided above that, through sending the signaling including the uplink MIMO control information to the UE, the uplink MIMO mode may be controlled to switch freely among start, stop, and continuation.

### BRIEF DESCRIPTION OF THE DRAWINGS

FIG. 1 is a schematic flow chart of a method for MIMO mode control according to an embodiment of the present invention;
FIG. 2 is a schematic structural view of a signaling sending device according to another embodiment of the present invention;
FIG. 3 is a schematic structural view of a UE according to another embodiment of the present invention; and
FIG. 4 is a schematic view of a communication system according to an embodiment of the present invention.

### DETAILED DESCRIPTION OF THE EMBODIMENTS

In order to make the objectives, technical solutions, and advantages of the present invention more comprehensible, embodiments of the present invention are described in detail below with reference to the accompanying drawings.

An embodiment of the present invention provides a method and system for MIMO mode control includes the following steps. A network side constructs signaling, where the signaling includes uplink MIMO control information, and the uplink MIMO control information is used to instruct a UE to control an uplink MIMO mode according to the uplink MIMO control information. Then, the network side sends the signaling to the UE. By sending the signaling including the uplink MIMO control information to the UE, the uplink MIMO mode may be controlled to switch freely among start, stop, and continuation.

In an embodiment of the present invention, the signaling including the uplink MIMO control information may be high-speed shared control channel, HS-SCCH, order or high-layer signaling.
(1) When the signaling is the HS-SCCH order:
   The uplink MIMO control information is used to instruct a UE to stop an uplink MIMO mode or is used to instruct the UE to start the uplink MIMO mode.
(2) When the signaling is the high-layer signaling:
   When the uplink MIMO control information does not include a parameter for configuring an uplink MIMO, the uplink MIMO control information is used to instruct the UE to stop the uplink MIMO mode.

When the signaling is the high-layer signaling, and the uplink MIMO control information includes a parameter for indicating an uplink MIMO state and the parameter for configuring the uplink MIMO, the uplink MIMO control information is used to instruct a UE being in a dedicated transmission channel communication CELL_DCH state to control the uplink MIMO mode according to the parameter for indicating the uplink MIMO state and the parameter for configuring the uplink MIMO.

For example, when the parameter for indicating the uplink MIMO state is used to instruct the UE to start the uplink MIMO mode, the uplink MIMO control information is used to instruct the UE being in the dedicated transmission channel communication CELL_DCH state to start the uplink MIMO mode according to the parameter for configuring the uplink MIMO; or, when the parameter for indicating the uplink MIMO state is used to instruct the UE to continue the uplink MIMO mode, the uplink MIMO control information is used to instruct the UE being in the CELL_DCH state to continue the uplink MIMO mode according to the parameter for configuring the uplink MIMO.

The parameter for configuring the uplink MIMO is used to configure the uplink MIMO mode when the UE starts or continues the uplink MIMO mode, and according to actual requirements, the parameter for configuring the uplink MIMO may include information such as an uplink pilot configuration parameter and so on.

The high-layer signaling in (2) may be active set update, cell configuration update, or other reconfiguration signaling delivered by a high layer. The illustration herein is not to limit the high-layer signaling, and any high-layer signaling which can instruct the UE to convert the uplink MIMO mode is included.

It can be known from the embodiment of the MIMO mode control method that, the network side sends the signaling to instruct the UE to control the uplink MIMO mode to switch freely among start, stop, and continuation.

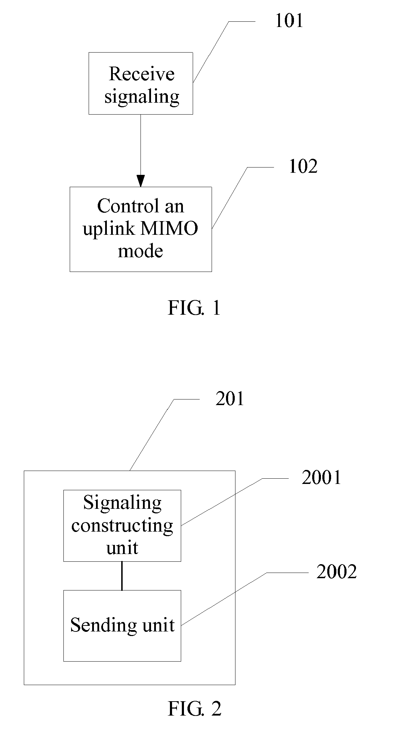

FIG. 1 is a schematic flow chart of an MIMO mode control method according to an embodiment of the present invention. The method may include the following steps.

In step 101, a UE receives signaling sent by a network side, where the signaling includes uplink MIMO control information.

In step 102, the UE controls an uplink MIMO mode according to the uplink MIMO control information.

In the embodiment, the UE may control the uplink MIMO mode to switch freely among start, stop, and continuation according to the signaling including the uplink MIMO control information.

In an embodiment of the present invention, the signaling including the uplink MIMO control information may be HS-SCCH order or high-layer signaling.
(1) When the signaling received by the UE is the HS-SCCH order:
   Step 102 includes: the UE stops the uplink MIMO mode according to the uplink MIMO control information, or the UE starts the uplink MIMO mode according to the uplink MIMO control information.

Specifically, if the HS-SCCH order includes the uplink MIMO control information indicating to stop the uplink MIMO mode, the UE stops an operation of the uplink MIMO mode; and if the HS-SCCH order includes the uplink MIMO control information indicating to start the uplink MIMO mode, the UE starts the operation of the uplink MIMO mode.

An example of controlling the uplink MIMO mode through the HS-SCCH order is as follows.

First, the HS-SCCH order is defined as follows.

In the HS-SCCH order, xodt,1, xodt,2, xodt,3, xord,1, xord,2, xord,3 are taken as the uplink MIMO control information, which is defined as:
- Order type (3 bits): xodt,1, xodt,2, xodt,3
- Order (3 bits): xord, 1, xord,2, xord,3

If a signaling mode xodt,1, xodt,2, xodt,3 ='001', signaling contents xord,1, xord,2, xord,3 can be defined as (when the signaling modes Order type are the same, the signaling contents can be defined differently):
- xord,1: 0, deactivating an uplink MIMO mode
1, activating the uplink MIMO mode
- xord,2: 0, deactivating a downlink MIMO mode
1, activating the downlink MIMO mode
- xord, 3: reservation

The signaling mode may be any combination except '000' (since the mode of 000 has been used in the prior art), the combinations of xord,1, xord,2, xord,3 (for example, xord,1 and xord,3 are used to define to deactivate or activate the uplink or downlink mode, and the xord,2 is taken as reservation, or, the xord,2 and xord,3 are used to define to deactivate or activate the uplink or downlink mode, and the xord,1 is taken as reservation) should be covered within the protection scope. Corresponding to using the HS-SCCH order to activate/deactivate the uplink MIMO mode, using the HS-SCCH order to activate/deactivate the uplink MIMO mode is also covered within the scope of the embodiment of the present invention.
(2) When the signaling in step 101 is the high-layer signaling, the following several situations may be included.

If the uplink MIMO control information in the high-layer signaling does not include the parameter for configuring the uplink MIMO, the UE stops the uplink MIMO mode.

If the uplink MIMO control information in the high-layer signaling includes the parameter for indicating the uplink MIMO state and the parameter for configuring the uplink MIMO, the UE controls the uplink MIMO mode according to the parameter for indicating the uplink MIMO state and the parameter for configuring the uplink MIMO.

For example, when the UE is in a dedicated transmission channel communication CELL_DCH state, the parameter for indicating the uplink MIMO state indicates the start, the UE starts the uplink MIMO mode according to the parameter for configuring the uplink MIMO; or, when the UE is in the CELL_DCH state, and the parameter for indicating the uplink MIMO state indicates the continuation, the UE continues the uplink MIMO mode according to the parameter for configuring the uplink MIMO.

The parameter for configuring the uplink MIMO may include a parameter for configuring the uplink MIMO mode, such as an uplink pilot configuration parameter and so on.

It can be known from the embodiment of the MIMO mode control method that, the network side sends the signaling to instruct the UE to control the uplink MIMO mode to switch freely among start, stop, and continuation.

An embodiment of a signaling sending device is shown in FIG. 2.

A signaling sending device 201 may include a signaling constructing unit 2001 and a sending unit 2002.

The signaling constructing unit 2001 is configured to construct signaling, where the signaling includes uplink MIMO control information, and the uplink MIMO control information is used to instruct a UE to control an uplink MIMO mode according to the uplink MIMO control information.

The sending unit 2002 is configured to send the signaling to the UE.

The signaling sending device 201 may be a device capable of transmitting high-layer signaling, such as a Radio Network Controller, RNC, or a device capable of transmitting a HS-SCCH order, such as a Node B.
(1) When the signaling is the HS-SCCH order:
   The sending unit 2002 is configured to send the HS-SCCH order including the uplink MIMO control information used to instruct the UE to stop an uplink MIMO mode; or, is used to send the HS-SCCH order including the uplink MIMO control information used to instruct the UE to start the uplink MIMO mode.
(2) When the signaling is the high-layer signaling:
   The sending unit 2002 is configured to send the high-layer signaling not including a parameter for configuring an uplink MIMO in the uplink MIMO control information, where the uplink MIMO control information is used to instruct the UE to stop the uplink MIMO mode.

Alternatively, the sending unit 2002 is configured to send the high-layer signaling including a parameter for indicating an uplink MIMO state and the parameter for configuring the uplink MIMO in the uplink MIMO control information, where the uplink MIMO control information is used to instruct the UE being in a dedicated transmission channel communication CELL_DCH state to control the uplink MIMO mode according to the parameter for indicating the uplink MIMO state and the parameter for configuring the uplink MIMO.

For example, when the parameter for indicating the uplink MIMO state is used to instruct the UE to start the uplink MIMO mode, the uplink MIMO control information is used to instruct the UE being in the dedicated transmission channel communication CELL_DCH state to start the uplink MIMO mode according to the parameter for configuring the uplink MIMO; or, when the parameter for indicating the uplink MIMO state is used to instruct the UE to continue the uplink MIMO mode, the uplink MIMO control information is used to instruct the UE being in the CELL_DCH state to continue the uplink MIMO mode according to the parameter for configuring the uplink MIMO.

The parameter for configuring the uplink MIMO is used to configure the uplink MIMO mode when the UE starts or continues the uplink MIMO mode, and according to actual requirements, the parameter for configuring the uplink MIMO may include information such as an uplink pilot configuration parameter.

In can be known from the embodiment of the signaling sending device that, the signaling sending device of the network side sends the signaling to instruct the UE to control the uplink MIMO mode to switch freely among start, stop, and continuation.

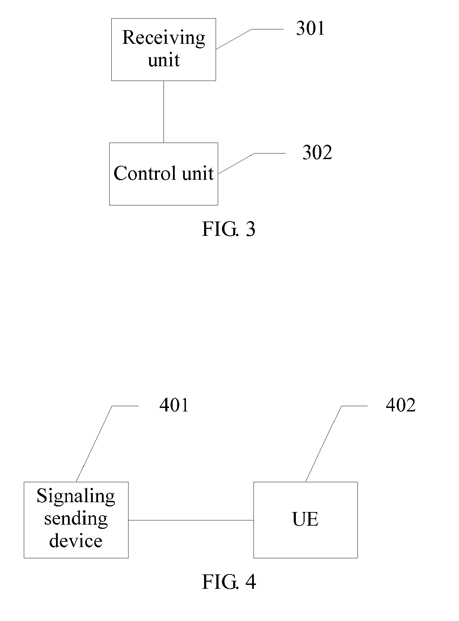

An embodiment of a UE is shown in FIG. 3.

As shown in FIG. 3, the UE may include a receiving unit 301 and a control unit 302.

The receiving unit 301 is configured to receive signaling sent by a network side, where the signaling includes uplink MIMO control information. The control unit 302 is configured to control the uplink MIMO mode according to the uplink MIMO control information.
(1) When the signaling is HS-SCCH order:
   The control unit 302 is further configured to stop an uplink MIMO mode when the uplink MIMO control information indicates to stop the uplink MIMO mode.

Alternatively, the control unit 302 is further configured to start an operation of the uplink MIMO mode when the uplink MIMO control information indicates to start the uplink MIMO mode.
(2) When the signaling is high-layer signaling:
   The control unit 302 is further configured to stop the uplink MIMO mode when the uplink MIMO control information does not include a parameter for configuring an uplink MIMO.

Alternatively, the control unit 302 is further configured to control the uplink MIMO mode according to a parameter for indicating an uplink MIMO state and the parameter for configuring the uplink MIMO when the uplink MIMO control information includes the parameter for indicating the uplink MIMO state and the parameter for configuring the uplink MIMO and if the UE is in a dedicated transmission channel communication CELL_DCH state. For example, when the parameter for indicating the uplink MIMO state indicates the start, the control unit 302 starts the uplink MIMO mode according to the parameter for configuring the uplink MIMO; or, when the parameter for indicating the uplink MIMO state indicates the continuation, the control unit 302 continues the uplink MIMO mode according to the parameter for configuring the uplink MIMO.

The parameter for configuring the uplink MIMO may include a parameter for configuring the uplink MIMO mode, such as an uplink pilot configuration parameter and so on.

The UE in the embodiment of the UE may be a mobile terminal, such as a mobile phone. Any device that can receive the signaling and switch the uplink MIMO mode may be included.

It can be known from the embodiment of the UE that, the network side sends the signaling to instruct the UE to control the uplink MIMO mode to switch freely among start, stop, and continuation.

An embodiment of a communication system is shown in FIG. 4.

FIG. 4 is a schematic structural view of an embodiment of a communication system. The communication system includes a signaling sending device 401 and a UE 402.

The signaling sending device 401 is configured to send signaling to the UE 402, where the signaling includes uplink MIMO control information, and the uplink MIMO control information is used to instruct the UE 402 to control an uplink MIMO mode according to the uplink MIMO control information.

The UE 402 is configured to receive the signaling sent by the signaling sending device 401, and control the uplink MIMO mode according to the uplink MIMO control information.

The communication system including the signaling sending device 401 and the UE 402 may control the uplink MIMO mode in many ways, which are described as follows.
(1) The signaling sending device 401 is further configured to send HS-SCCH order, and the uplink MIMO control information in the HS-SCCH order is used to indicate to stop the uplink MIMO mode, or is used to indicate to start the uplink MIMO mode.

The UE 402 is further configured to receive the HS-SCCH order, and stop the uplink MIMO mode according to the uplink MIMO control information; or start the uplink MIMO mode according to the uplink MIMO control information.
(2) The signaling sending device 401 may be further configured to send high-layer signaling.
   A. When the uplink MIMO control information in the high-layer signaling does not include a parameter for configuring an uplink MIMO:
      The UE 402 is further configured to receive the high-layer signaling, and stop the uplink MIMO mode according to the uplink MIMO control information.
   B. When the uplink MIMO control information in the high-layer signaling includes a parameter for indicating an uplink MIMO state and the parameter for configuring the uplink MIMO:
      When the UE 402 is in a dedicated transmission channel communication CELL_DCH state, the UE 402 is configured to control the uplink MIMO mode according to the parameter for indicating the uplink MIMO state and the parameter for configuring the uplink MIMO.

For example, when the UE 402 is in the dedicated transmission channel communication CELL_DCH state, and the parameter for indicating the uplink MIMO state indicates to start the uplink MIMO state, the UE 402 is further configured to start the uplink MIMO mode according to the parameter for configuring the uplink MIMO; or when the parameter for indicating the uplink MIMO state indicates to continue the uplink MIMO state, the UE 402 is further configured to continue the uplink MIMO mode according to the parameter for configuring the uplink MIMO.

It can be known from the embodiment of the communication system that, the signaling sending device sends the signaling to instruct the UE to control the uplink MIMO mode to switch freely among start, stop, and continuation.

Those of ordinary skill in the art should understand that all or a part of the steps in the method of the above embodiments can be realized by instructing relative hardware with programs. The programs may be stored in a computer readable storage medium, such as a read only memory (ROM), a magnetic disk, or an optical disk.

The method and system for uplink MIMO mode control are illustrated in detail in the embodiments of the present invention. Specific examples are provided to describe the principle and implementation of the present invention, and the above embodiments are only used to help understand the method and core theme of the present invention. Meanwhile, those of ordinary skill in the art can make variations on the implementation and application according to the concept of the invention. Therefore, the present invention should not be limited to the above disclosure.

## Claims

1. A method for Multiple-Input Multiple-Output, MIMO, mode control, comprising:
constructing signaling, wherein the signaling comprises uplink MIMO control information, and the uplink MIMO control information is used to instruct a User Equipment, UE, to control an uplink MIMO mode according to the uplink MIMO control information; and
sending the signaling to the UE.

2. The method for MIMO mode control according to claim 1, wherein the signaling is high-speed shared control channel, HS-SCCH, order or high-layer signaling.

3. The method for MIMO mode control according to claim 2, wherein when the signaling is the HS-SCCH order, the uplink MIMO control information is used to instruct the UE to stop the uplink MIMO mode, or
the uplink MIMO control information is used to instruct the UE to start the uplink MIMO mode.

4. The method for MIMO mode control according to claim 2, wherein when the signaling is the high-layer signaling, and the uplink MIMO control information does not comprise a parameter for configuring an uplink MIMO, the uplink MIMO control information is used to instruct the UE to stop the uplink MIMO mode.

5. The method for MIMO mode control according to claim 2, wherein when the signaling is the high-layer signaling, and the uplink MIMO control information comprises a parameter for indicating an uplink MIMO state and a parameter for configuring an uplink MIMO, the uplink MIMO control information is used to instruct a UE being in a dedicated transmission channel communication CELL_DCH state to control the uplink MIMO mode according to the parameter for indicating the uplink MIMO state and the parameter for configuring the uplink MIMO.

6. A method for Multiple-Input Multiple-Output, MIMO, mode control, comprising:
receiving signaling sent by a network side, wherein the signaling comprises uplink MIMO control information; and
controlling an uplink MIMO mode according to the uplink MIMO control information.

7. The method for MIMO mode control according to claim 6, wherein the signaling is high-speed shared control channel, HS-SCCH, order or high-layer signaling.

8. The method for MIMO mode control according claim 7, wherein,
when the signaling is the HS-SCCH order, and the uplink MIMO control information indicates to stop the uplink MIMO mode, the controlling the uplink MIMO mode according to the uplink MIMO control information comprises: stopping the uplink MIMO mode; and
when the signaling is the HS-SCCH order, and the uplink MIMO control information indicates to start the uplink MIMO mode, the controlling the uplink MIMO mode according to the uplink MIMO control information comprises: starting the uplink MIMO mode.

9. The method for MIMO mode control according to claim 7, wherein,
when the signaling is the high-layer signaling, and the uplink MIMO control information does not comprise a parameter for configuring an uplink MIMO, the controlling the uplink MIMO mode according to the uplink MIMO control information comprises: stopping the uplink MIMO mode.

10. The method for MIMO mode control according to claim 7, wherein when the signaling is the high-layer signaling, and the uplink MIMO control information comprises a parameter for indicating an uplink MIMO state and a parameter for configuring an uplink MIMO, the controlling the uplink MIMO mode according to the uplink MIMO control information comprises:
when the UE is in a dedicated transmission channel communication CELL_DCH state, controlling the uplink MIMO mode according to the parameter for indicating the uplink MIMO state and the parameter for configuring the uplink MIMO.

11. A signaling sending device, comprising:
a signaling constructing unit, configured to construct signaling, wherein the signaling comprises uplink Multiple-Input Multiple-Output, MIMO, control information, and the uplink MIMO control information is used to instruct a User Equipment, UE, to control an uplink MIMO mode according to the uplink MIMO control information; and
a sending unit, configured to send the signaling to the UE.

12. The signaling sending device according to claim 11, wherein the sending unit is further configured to send high-speed shared control channel, HS-SCCH, order comprising the uplink MIMO control information or high-layer signaling comprising the uplink MIMO control information.

13. The signaling sending device according to claim 12, wherein,
the sending unit is further configured to send the HS-SCCH order comprising the uplink MIMO control information used to instruct the UE to stop the uplink MIMO mode; or
the sending unit is configured to send the HS-SCCH order comprising the uplink MIMO control information used to instruct the UE to start the uplink MIMO mode.

14. The signaling sending device according to claim 12, wherein when the sending unit is configured to send the high-layer signaling not comprising a parameter for configuring an uplink MIMO in the uplink MIMO control information, the uplink MIMO control information is used to instruct the UE to stop the uplink MIMO mode.

15. The signaling sending device according to claim 12, wherein when the sending unit is configured to send the high-layer signaling comprising a parameter for indicating an uplink MIMO state and a parameter for configuring an uplink MIMO in the uplink MIMO control information,
the uplink MIMO control information is used to instruct a UE being in a dedicated transmission channel communication CELL_DCH state to control the uplink MIMO mode according to the parameter for indicating the uplink MIMO state and the parameter for configuring the uplink MIMO.

16. A User Equipment, UE, comprising:
a receiving unit, configured to receive signaling sent by a network side, wherein the signaling comprises uplink Multiple-Input Multiple-Output, MIMO, control information; and
a control unit, configured to control an uplink MIMO mode according to the uplink MIMO control information.

17. The UE according to claim 16, wherein the receiving unit is further configured to receive high-speed shared control channel, HS-SCCH, order comprising the uplink MIMO control information or high-layer signaling comprising the uplink MIMO control information.

18. The UE according to claim 17, wherein the control unit is further configured to stop the uplink MIMO mode when the signaling is the HS-SCCH order, and the uplink MIMO control information indicates to stop the uplink MIMO mode, or
the control unit is configured to start the uplink MIMO mode when the uplink MIMO control information indicates to start the uplink MIMO mode.

19. The UE according to claim 17, wherein the control unit is further configured to stop the uplink MIMO mode when the signaling is the high-layer signaling, and the uplink MIMO control information does not comprise a parameter for configuring an uplink MIMO.

20. The UE according to claim 17, wherein the control unit is further configured to, when the signaling is the high-layer signaling, and the uplink MIMO control information comprises a parameter for indicating an uplink MIMO state and a parameter for configuring an uplink MIMO,
control the uplink MIMO mode according to the parameter for indicating the uplink MIMO state and the parameter for configuring the uplink MIMO if the UE is in a dedicated transmission channel communication CELL_DCH state.

21. A communication system, comprising a signaling sending device and a User Equipment (UE), wherein
the signaling sending device is configured to send signaling to the UE, wherein the signaling comprises uplink Multiple-Input Multiple-Output, MIMO, control information, and the uplink MIMO control information is used to instruct the UE to control an uplink MIMO mode according to the uplink MIMO control information; and
the UE is configured to receive the signaling sent by the signaling sending device and comprising the uplink MIMO control information, and control the uplink MIMO mode according to the uplink MIMO control information.

22. The communication system according to claim 21, wherein the signaling sending device is further configured to send high-speed shared control channel, HS-SCCH, order, and the uplink MIMO control information in the HS-SCCH order is used to indicate to stop the uplink MIMO mode, or is used to indicate to start the uplink MIMO mode; and
the UE is further configured to receive the HS-SCCH order, stop the uplink MIMO mode according to the uplink MIMO control information used to indicate to stop the uplink MIMO mode, or start the uplink MIMO mode according to the uplink MIMO control information used to indicate to start the uplink MIMO mode.

23. The communication system according to claim 21, wherein the signaling sending device is further configured to send high-layer signaling, and the uplink MIMO control information in the high-layer signaling does not comprise a parameter for configuring an uplink MIMO; and
the UE is further configured to receive the high-layer signaling, and stop the uplink MIMO mode according to the uplink MIMO control information.

24. The communication system according to claim 21, wherein the signaling sending device is further configured to send the high-layer signaling, and the uplink MIMO control information in the high-layer signaling comprises a parameter for indicating an uplink MIMO state and a parameter for configuring an uplink MIMO; and
when the UE is in a dedicated transmission channel communication CELL_DCH state, the UE controls the uplink MIMO mode according to the parameter for indicating the uplink MIMO state and the parameter for configuring the uplink MIMO.
